(19) Europäisches Patentamt
European Patent Office
Office européen des brevets

(11) **EP 3 441 722 B1**

(12) **EUROPÄISCHE PATENTSCHRIFT**

(45) Veröffentlichungstag und Bekanntmachung des Hinweises auf die Patenterteilung:
**04.11.2020  Patentblatt 2020/45**

(51) Int Cl.:
**G01C 21/34** *(2006.01)*       **G06Q 10/08** *(2012.01)*
**G06Q 30/02** *(2012.01)*

(21) Anmeldenummer: **18187596.4**

(22) Anmeldetag: **06.08.2018**

(54) **VERFAHREN ZUR DYNAMISCHEN AUSLASTUNGSOPTIMIERUNG VON TRANSPORTMITTELN, INSBESONDERE FRACHTTRANSPORTMITTELN**

METHOD FOR DYNAMICALLY OPTIMISING THE UTILISATION OF MEANS OF TRANSPORT, IN PARTICULAR MEANS OF FREIGHT TRANSPORT

PROCÉDÉ D'OPTIMISATION DYNAMIQUE DE L'UTILISATION DES MOYENS DE TRANSPORT, EN PARTICULIER DES MOYENS DE TRANSPORT DE MARCHANDISES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.08.2017   DE 102017117967**

(43) Veröffentlichungstag der Anmeldung:
**13.02.2019   Patentblatt 2019/07**

(73) Patentinhaber: **IMPARGO GmbH**
**14467 Potsdam (DE)**

(72) Erfinder:
• **HÄNEL, Gerhard**
**10115 Berlin (DE)**
• **LABEIT, Julian**
**76131 Karlsruhe (DE)**

(74) Vertreter: **Flügel Preissner Schober Seidel Patentanwälte PartG mbB**
**Nymphenburger Strasse 20**
**80335 München (DE)**

(56) Entgegenhaltungen:
**DE-U1-202015 103 648     US-A1- 2015 248 638**
**US-A1- 2016 069 694**

• **Daniel Delling: "Algorithmen für Routenplanung", KIT - Institut für Theoretische Informatik , 20. Juni 2012 (2012-06-20), XP002787596, Gefunden im Internet: URL:https://i11www.iti.kit.edu/_media/teac hing/sommer2012/routenplanung/vorlesung15. pdf [gefunden am 2018-12-18]**

**Beschreibung**

Die Erfindung betrifft ein Verfahren zur dynamischen Auslastungsoptimierung von Transportmitteln, insbesondere Frachttransportmittel, wobei einem Benutzer eine nach Relevanz sortierte Angebotsmenge von bestehenden Transporten anderer Benutzer angezeigt bzw. angeboten wird, um diese mit seiner Transportanfrage zu kombinieren.

Häufig lastet ein einzelner Transportauftrag das für den zugehörigen Transport verwendete Frachtfahrzeug nicht vollständig aus. Deshalb ist es sinnvoll mehrere Transporte zu einer Tour zusammenzulegen, um die Auslastung zu erhöhen. Hierfür haben sich z.B. sogenannte Frachtbörsen gebildet, in denen einem Benutzer, der eine Fracht zwischen zwei bestimmten Orten transportieren möchte, weitere Transporte angeboten werden, mit welchen sich die Transportanfrage kombinieren lässt. Meistens unterscheiden sich die Start-und Zielorte (oder auch Be- und Entladestellen) des bestehenden Transports und der Transportanfrage, sodass für den Fahrer ein Umweg entsteht. Für alle Beteiligten ist ein möglichst kleiner Umweg wünschenswert.

Bisherige Frachtenbörsen haben Filter, um nicht relevante Transporte auf Grundlage von geographischen Merkmalen oder Benutzerrestriktionen auszuschließen (im Sinne eines Ausschlussverfahrens). So wird beispielsweise von Region nach Region gesucht oder in einem 50 km Korridor zwischen zwei Postleitzahlen. Das resultierende Ergebnis des Ausschlussverfahrens wird nicht weiter bearbeitet oder sortiert. Für den Benutzer ist es somit schwer einzuschätzen, ob das ihm angebotene Ergebnis kosteneffizient ist. US 2015/248638 A1 als auch Daniel Delling: "Algorithmen für Routenplanung", KIT - Institut für Theoretische Informatik, 20. Juni 2012 (abrufbar unter URL:https://i11www.iti.kit.edu/mediajteachingjsommer2012/routenplanungjvorlesung15.pdf) befassen sich mit Verfahren für die Routenplanung.

Aufgabe der vorliegenden Erfindung ist das Minimieren des Umwegs für einen bestehenden Transport beim Kombinieren einer Transportanfrage in den Transport in Echtzeit. Diese Aufgabe wird durch das Verfahren gemäß Anspruch 1 gelöst.

Bevorzugte Ausführungsformen finden sich in den abhängigen Ansprüchen.

Das Verfahren zur dynamischen datenbasierten Auslastungsoptimierung von Transportmitteln, insbesondere Frachttransportflotten, bei dem einem Benutzer, insbesondere unter Verwendung von Benutzerrestriktionen, die von dem Benutzer eingegebenen werden, eine nach Relevanz sortierte Angebotsmenge von bestehenden Transporten angeboten wird, um eine über die Transportanfrage repräsentierten Transport des Benutzers mit einem oder mehreren dieser bestehende Transporte zu kombinieren, umfasst folgende Schritte:

a) Erfassen von mindestens einer Landmarkendistanz, welche eine Distanz zwischen Landmarken und/oder mindestens einer Beladestelle und/oder mindestens einer Entladestelle darstellt, und/oder einer Transportdistanz, insbesondere eine Distanz zwischen der Beladestelle und der Entladestelle, für jeden bestehenden Transport aus einer Transportgesamtmenge;

b) Erfassen einer Direktdistanz, welche eine Distanz zwischen einem Startpunkt und einem Zielpunkt der Transportanfrage darstellt;

c) Abschätzen einer Verbindungsdistanz für mindestens einen Transport, welche eine Distanz zwischen dem Startpunkt und der Beladestelle und/oder einer Distanz zwischen der Entladestelle und dem Zielpunkt darstellt, unter Verwendung von mindestens einer Landmarkendistanz;

d) Abschätzen eines Umwegs für mindestens einen Transport unter Verwendung der erfassten Direktdistanz und der erfassten Transportdistanz und mindestens einer abgeschätzten Verbindungsdistanz für jeden bestehenden Transport aus der Transportgesamtmenge;

e) Abschätzen einer geschätzten Relevanz von mindestens einem Transports auf Basis des geschätzten Umwegs;

f) Durchführen eines Relevanzausschlussverfahrens unter Verwendung der Höhe der geschätzten Relevanz zum Bestimmen einer relevanten Angebotsmenge aus der Transportgesamtmenge;

g) Bestimmen des exakten Umwegs jedes bestehenden Transports aus der relevanten Angebotsmenge;

h) Bestimmen einer bestimmten Relevanz der bestehenden Transporte aus der relevanten Angebotsmenge unter Verwendung des exakten Umwegs in Bezug auf die Transportanfrage;

i) Anordnen der bestehenden Transporte aus der relevanten Angebotsmenge nach der bestimmten Relevanz;

j) insbesondere, Durchführen eines nach der bestimmten Relevanz aus der relevanten Angebotsmenge ausgewählten Transports, in der die Transportanfrage integriert ist.

Die Anzahl der bestehenden Transporte liegt vorzugsweise in einem Bereich von 100000 bis 1000000. Das Bestimmen des exakten Umwegs jedes bestehenden Transports ist aufgrund der Komplexität der Aufgabe nicht in Echtzeit durchführbar.

Die Durchführung eines Relevanzausschlussverfahrens gemäß dem erfindungsgemäßen Verfahren führt zu einem Reduzieren der relevanten bestehenden Transporte. Somit kann die Menge der Transporte, deren Umweg genau berechnet werden muss, soweit reduziert werden, dass eine Ergebnisdarstellung in Echtzeit für den Benutzer möglich ist und auf zuverlässige Weise den Transport mit welchem die Transportanfrage kombiniert werden soll, mit dem minimalen Umweg angeboten werden kann. Das Durchführen solch eines optimalen Transports führt zu einer höheren Auslastung der Transportmittel, reduziert das Verkehrsaufkommen, spart folglich Zeit und Treibstoff und schont die Umwelt bzw. die Infrastruktur.

In Frachtenbörsen gibt es zwei Arten wie bestehende Transporte angeboten werden. Erstens - es wird Frachtraum angeboten. Hierbei wird der Transport vom Angebotsersteller ausgeführt und dieser bietet an zusätzliche Fracht aufzuladen. Zweitens - es wird zu transportierende Ware angeboten. Hierbei wird der Transport nicht vom Angebotsersteller ausgeführt, sondern bei der Kombination mit einer Transportanfrage der entsprechenden ausführenden Partei weiterverkauft. Eine Transportanfrage kann hierbei also die Suche nach verfügbarem Laderaum darstellen oder die Suche nach Zu- oder Rückladung sein. Wir gehen im Folgenden vom letzten Fall aus, d.h. dass die Angebotsmenge aus Transporten für angebotene Waren besteht. Das beschriebene System kann jedoch auch auf ersteren Fall angewendet werden.

Die bestehenden Transporte werden vorteilhaft einer oder mehreren geographischen Regionen zugeordnet, welche angeben, durch welche Regionen der bestehende Transport verläuft. Der geographische Bereich kann in vorgegebene Regionen eingeteilt werden, insbesondere Länder oder Bundesstaaten. Die Regionen können auch automatisch gewählt werden, insbesondere kann der gesamte geographische Bereich in gleich große Abschnitte unterteilt werden.

Insbesondere ist es möglich den entstehenden Umweg bei der Zusammenlegung eines bestehenden Transports mit einer Transportanfrage über die Gesamtmenge der bestehenden Transporte in Echtzeit zu minimieren.

Mehrere Transporte können zu einer Tour kombiniert werden. Insbesondere umfasst eine Tour mehrere Be- und Entladestellen. Unter Transport ist insbesondere eine Fahrt eines Transportmittels zu verstehen. Transportmittel umfassen insbesondere Nutzfahrzeugmittel oder Teile davon.

Bevor ein Benutzer eine Anfrage in Form einer Transportanfrage stellt, werden sogenannte Landmarkendistanzen erfasst. Landmarkendistanzen sind Distanzen zwischen Landmarken und/oder der Beladestelle und/oder der Entladestelle eines bestehenden Transports. Vorzugsweise sind Landmarken geographische Punkte, insbesondere Städte. Vorzugsweise werden die Landmarkendistanzen unter Verwendung einer Routenplanungsengine berechnet. Beispielsweise können hierfür verschiedene Distanzmetriken benutzt werden, insbesondere Straßenkilometer und/oder Reisezeit und/oder Fahrtkosten.

In einer bevorzugten Ausgestaltung werden die Landmarken basierend auf den geographischen Daten der Transportanfragen ausgewählt. Beispielsweise werden von den zur Verfügung stehenden Landmarken, jene ausgewählt, welche in der Nähe der Beladestelle, der Entladestelle, dem Startpunkt dem Zielpunkt sind.

Die Routenplanungsengine berechnet unter Verwendung von hinterlegten Geodaten (routenfähige Straßennetzdaten, geokodierte Hausnummern, Points of Interest) eine Distanz zwischen zwei oder mehreren Objekten. Vorzugsweise wird die Direktdistanz der Transportanfrage unter Verwendung einer Routenplanungsengine berechnet.

Die Angebotsmenge stellt eine Vorauswahl an relevanten bestehenden Transporten in Bezug auf die Transportanfrage dar. Die bestehenden Transporte sind bereits fest eingeplante Transporte anderer Benutzer, deren Zuladung zum Transport aus der Transportanfrage des Benutzers nicht der Maximalbeladung des benutzten Fahrzeugs des Benutzers entspricht und somit noch Ladeplatz für mindestens einen weiteren zu integrierenden Transport aufweist. Vorzugsweise weist die Angebotsmenge eine Größenordnung von ungefähr 1000 Transporten auf, um sicherzustellen, dass das Relevanzranking in Echtzeit ausgeführt werden kann. Beispielsweise erfolgt die Abschätzung der Verbindungsdistanzen unter Anwendung der Dreiecksungleichung für Graphen. Die Dreiecksungleichungen können sowohl für den tatsächlichen Fahrweg, als auch für Fahrtzeiten und/oder Fahrtkosten verwendet werden.

Die Abschätzung s(X,Y) für eine Distanz d(X,Y) geschieht für alle Landmarken j durch folgende Formel:

$$d(X,Y) \geqq s(X,Y) = max_i \, (d(X,L_j) - d(Y,L_j), d(L_j,Y) - d(L_j,X))$$

Insbesondere wird für die Abschätzung einer Verbindungsdistanz der maximale Betrag aus den Differenzen der Distanzen zwischen den Startpunkten, beziehungsweise Zielpunkten zu den Landmarken berechnet.

Die Abschätzung s(S, Z) für eine Distanz d(S, Z) geschieht demnach für alle Landmarken j durch folgende

Formel:

$$s(S,Z) = max_i \, (d(S,L_j) - d(Z,L_j), d(L_j,Z) - d(L_j,S))$$

Die Abschätzung des Umwegs eines Transports berechnet sich somit aus der Summe der geschätzten Distanz zwischen dem Startpunkt und der Beladestelle, der geschätzten Distanz zwischen der Entladestelle und dem Zielpunkt und der exakten Distanz zwischen der Beladestelle und der Entladestelle (Schritt a), subtrahiert um die exakte Distanz zwischen dem Startpunkt und dem Zielpunkt (Schritt b).

Je mehr Landmarken vorhanden sind, desto besser wird die Abschätzung des Umwegs. Gleichzeitig reduziert sich jedoch die Geschwindigkeit der Berechnung. Die Anzahl der Landmarken wird so gewählt, dass eine Berechnung des Verfahrens in Echtzeit durchgeführt werden kann.

Vorzugsweise umfasst die relevante Angebotsmenge die bestehenden Transporte der Transportgesamtmenge, welche die höchste geschätzte Relevanz aufweisen.

Insbesondere wird der exakte Umweg eines Transports aus der Summe der erfassten Distanz zwischen dem Startpunkt und der Beladestelle, der erfassten Distanz zwischen der Entladestelle und dem Zielpunkt und der erfassten Distanz zwischen der Beladestelle und der Entladestelle, subtrahiert um die erfasste Distanz zwischen dem Startpunkt und dem Zielpunkt.

Die Distanz zwischen dem Startpunkt und den Beladestellen, sowie die Distanz zwischen den Entladestellen und dem Zielpunkt wurden zuvor geschätzt und nun für die reduzierte Angebotsmenge an Transporten exakt berechnet.

Vorteilhaft wird gemäß Anspruch 2 vor Schritt c) eine Restriktionsauschlussverfahren unter Verwendung von Benutzerrestriktionen ausgeführt, um die Schritte c) bis f) anstelle der Transportgesamtmenge anhand einer Transportteilmenge durchzuführen. Auf diese Weise kann die Berechnungszeit reduziert werden, womit eine Ergebnisdarstellung in Echtzeit für den Benutzer ermöglicht wird und der minimale Umweg und folglich die minimalen Kosten angeboten werden.

In einer bevorzugten Ausgestaltung wird das Restriktionsausschlussverfahren unter Verwendung der geographischen Zuordnung der bestehenden Transporte ausgeführt. Beispielsweise umfasst die Transportteilmenge lediglich Transporte, welche von keiner Restriktion im Zuge des Restriktionsausschlussverfahrens ausgeschlossen wurden.

Vorteilhaft kann beim Erfassen gemäß Schritt a) ein Attribut für jeden bestehenden Transport aus der Transportgesamtmenge erfasst werden. Attribute helfen dabei, das Restriktionsausschlussverfahren zu präzisieren und somit effizienter den bestehenden Transport mit dem minimalen Umweg für die Anfrage bereitzustellen.

Attribute können ein Gewicht des Transports und/oder Art der Fracht und/oder Lademeter des Transports und/oder Lastkilometer des Transports umfassen.

In einer vorteilhaften Ausgestaltung werden die bestehenden Transporte zusammen mit den Attributen gespeichert. Um eine schnellere Verarbeitung der bestehenden Transporte zu ermöglichen, werden die Attribute beim Speichern indiziert.

Durch eine Indizierung kann der Aufwand für das Restriktionsausschlussverfahren reduziert werden, womit eine Ergebnisdarstellung in Echtzeit für den Benutzer ermöglicht wird und der minimale Umweg für den angebotenen Transport und folglich die minimalen Kosten für den Benutzer angeboten werden können.

Vorteilhaft wird das Restriktionsausschlussverfahren unter Verwendung von automatisch generierten Restriktionen, die basierend auf den Benutzerrestriktionen und den Attributen berechnet werden, durchgeführt.

Vorteilhafterweise wird die geschätzte Relevanz unter Verwendung der Attribute berechnet.

Je genauer die Attribute die bestehenden Transporte beschreiben, desto weniger wahrscheinlich ist, dass eine relevanter Transport durch das Restriktionsausschlussverfahren fälschlicherweise ausgeschlossen wird.

Vorteilhafterweise wird die bestimmte Relevanz unter Verwendung der Attribute berechnet.

Je genauer die Attribute die bestehenden Transporte beschreiben, desto genauer ist die bestimmte Relevanz, womit mit erhöhter Wahrscheinlichkeit die Transporte mit der größten Relevanz ermittelt werden kann.

Vorteilhaft wird für jeden bestehenden Transport der Angebotsmenge mindestens eine Verbindungsdistanz, insbesondere die Distanz zwischen dem Startpunkt und der Beladestelle, unter Verwendung einer "one-to-many"-Berechnung und/oder die Distanz zwischen der Entladestelle und dem Zielpunkt, unter Verwendung einer "many-to-one"-Berechnung, erfasst.

Die einzelnen Stufen des Verfahrens sind derart angelegt, dass mit einer "o-ne-to-many"-Berechnung und einer "many-to-one"-Berechnung sämtliche Umwege der bestehenden Transporte ermittelt werden können, womit eine Ergebnisdarstellung in Echtzeit für den Benutzer ermöglicht wird und der minimale Umweg für den angebotenen Transport und folglich die minimalen Kosten für den Benutzer angeboten werden können

Insbesondere hängt die Berechnung des exakten Umwegs von mindestens einer erfassten Verbindungsdistanz, der erfassten Direktdistanz und der erfassten Transportdistanz ab.

Das Relevanzausschlussverfahren kann unter Verwendung eines Preismodells durchgeführt werden. Dem Preismodell können die Kosten des Transportes übergeben werden, sodass eine Marge ermittelt werden kann. Die Marge kann für das Relevanzausschlussverfahren verwendet werden.

Vorteilhaft schätzt das Preismodell einen Preis für einen Transport unter Verwendung von aktuellen Preisen und/oder historischen Preisen.

Beispielsweise passt das Preismodell den Preis für einen Transport unter Verwendung von aktuellen und historischen Volumenflüssen und Ladungsgesuchen an.

Die Schritte c) bis i) können vorteilhaft in Echtzeit durchgeführt werden. Unter in Echtzeit ist eine Berechnung von unter einer Sekunde, vorzugsweise von unter einer zehntel Sekunde, zu verstehen.

Vorzugsweise wird die Menge der Transporte, deren Umweg genau berechnet werden muss (Schritte g) bis i)), soweit reduziert, dass eine Ergebnisdarstellung in Echtzeit für den Benutzer möglich ist.

Die Menge der Transporte, deren Umweg genau berechnet werden muss (Schritte g) bis i)), wird auf 0,01% bis 5% der Menge der Transporte reduziert, insbesondere auf 0,1% bis 2%, weiter insbesondere auf 0,5% bis 1%. Die Menge der Transporte, deren Umweg genau berechnet werden muss, ist vorzugsweise die relevante Angebotsmenge.

Vorzugsweise wird vor Schritt a) jeder bestehende Transport aus der Transportgesamtmenge einer oder mehrerer Regionen zugeordnet, durch welche die Transporte verlaufen.

Vorzugsweise umfasst die Erfindung ein Computerprogrammprodukt mit einem Programm zum Durchführen des oben beschriebenen Verfahrens.

Im Folgenden werden das Verfahren sowie weitere Merkmale und Vorteile anhand eines Ausführungsbeispiels näher erläutert, die in den Figuren schematisch dargestellt sind.

Hierbei zeigen:

Fig. 1    ein Blockschaltbild des Berechnungssystems;

Fig. 2    ein Flussdiagramm des Verfahrens der ersten Einheit;

Fig. 3    ein Flussdiagramm des Verfahrens der zweiten Einheit;

Fig. 4    ein Flussdiagramm des Verfahrens der dritten Einheit;

Fig. 5    ein Flussdiagramm des Verfahrens der vierten Einheit; und

Fig. 6    eine Darstellung der Distanzen des Zahlenbeispiels zu dem erfindungsgemäßen Verfahren.

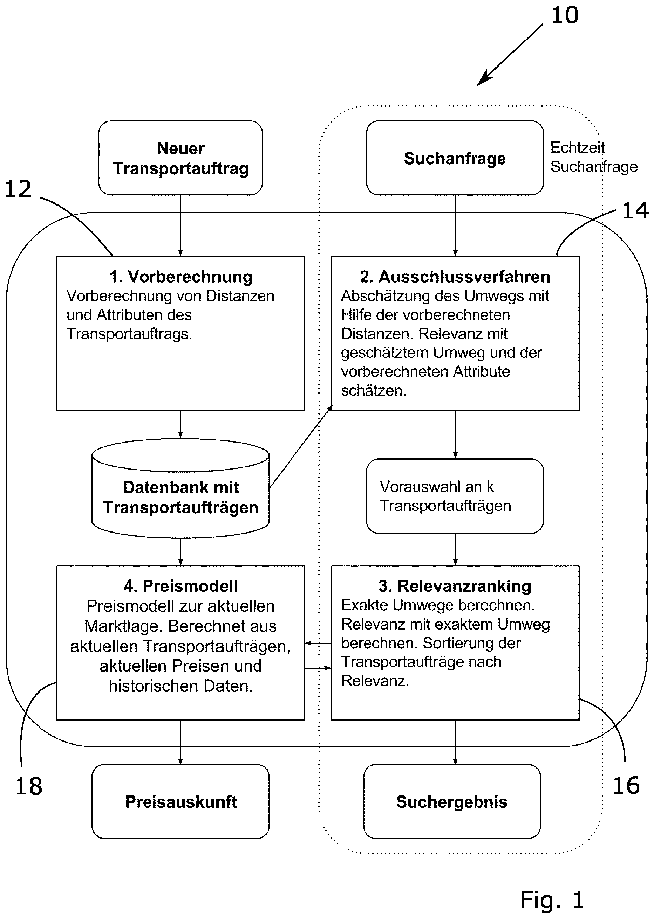

Fig. 1 zeigt ein Berechnungssystem 10 umfassend eine erste Einheit 12 zum Verarbeiten neuer Transporte $T_N$ die in das Berechnungssystem 10 gespeist werden. Außerdem umfasst das Berechnungssystem 10 eine zweite Einheit 14 und eine dritte Einheit 16 zum Beantworten von Suchanfragen von Benutzern in Echtzeit. Die zweite Einheit 14 führt ein Restriktionsausschlussverfahren durch und bestimmt aus einer Transportgesamtmenge $M_{Ges}$ im Berechnungssystem 10 eine Transportteilmenge $M_{Res}$, die für die Suchanfrage relevant sind. Außerdem führt die zweite Einheit 14 ein Relevanzausschlussverfahren durch und bestimmt eine relevante Angebotsmenge $M_{Rel}$ der Anzahl k aus der Transportteilmenge $M_{Res}$. Die Anzahl k weist idealerweise eine Größe von unter 1000 Transporten T auf. Die dritte Einheit 16 sortiert die bestehenden Transporte T der Angebotsmenge $M_{Rel}$ nach Relevanz. Das Berechnungssystem 10 umfasst eine vierte Einheit 18 zum Schätzen der Preise der Transporte T. Diese Preise fließen in das Relevanzranking der dritten Einheit 16 ein oder werden direkt den Benutzern zugänglich gemacht.

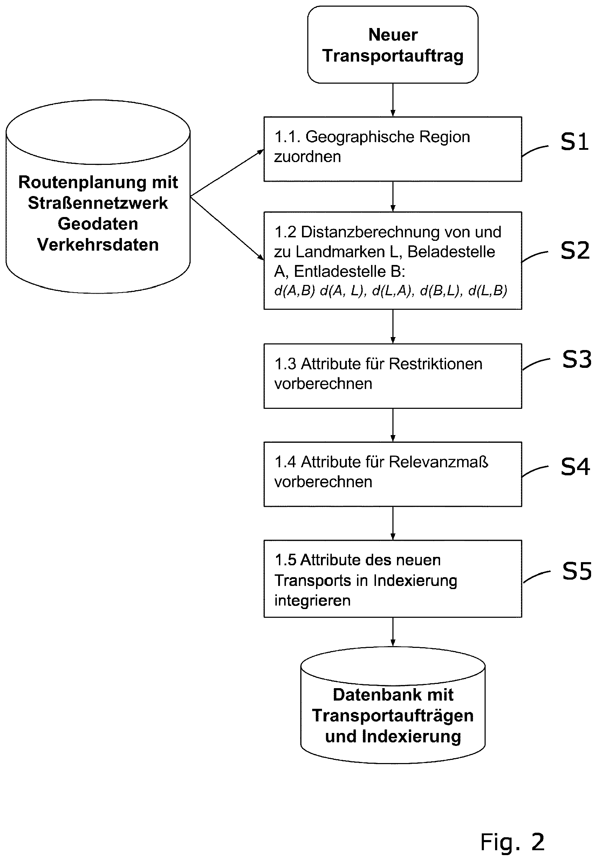

Fig. 2 zeigt wie ein neuer Transport $T_N$ zu dem System mit bestehenden Transporten T hinzugefügt wird. Um später schnellere Abfragen zu ermöglichen, werden mit dem neuen Transport $T_N$ vorberechnete Attribute gespeichert.

Dem neuen Transport $T_N$ werden in Schritt S1 eine oder mehrere geographische Regionen zugeordnet. Diese geben an, durch welche Regionen der neue Transport $T_N$ verläuft. Der geographische Bereich kann in vorgegebene Regionen eingeteilt werden, zum Beispiel Länder oder Bundesstaaten. Regionen können auch automatisch gewählt werden, zum Beispiel kann der gesamte geographische Bereich in gleich große Rechtecke unterteilt werden. Geographische Regionen werden benötigt, um nicht relevante bestehende Transporte T frühzeitig auszuschließen.

In Schritt S2 werden Landmarkendistanzen $D_{Lj}$ und die Transportdistanz $D_T$ berechnet. Landmarken $L_j$ sind geografische Punkte. Sie werden benötigt um Umwege $U_s$ abzuschätzen. In Europa werden zum Beispiel Landmarken am Rand Europas platziert. Die Transportdistanz $D_T$ für den i-ten Transport T umfasst die Distanz $d(A_i,B_i)$ zwischen der Beladestelle Ai und Entladestelle Bi. Landmarkendistanzen $D_{Lj}$ umfassen die Distanzen $d(A_i,L_j)$, $d(L_j,A_i)$, $d(B_i,L_j)$, $d(L_j,B_i)$ zwischen der Beladestelle Ai beziehungsweise der Entladestelle Bi und den Landmarken $L_j$. Für die Distanzberechnung wird eine Routenplanungsengine benutzt. Es können verschiedene Distanzmetriken benutzt werden, insbesondere Straßenkilometer, Reisezeit und Fahrtkosten.

In Schritt S3 werden alle Attribute, die Teil einer Restriktion sind vorberechnet. Zum Beispiel, falls nicht explizit angegeben, werden die Lademeter des Transports T berechnet.

In Schritt S4 werden alle Attribute, die Teil der Berechnung des Relevanzmaßes sind und zu diesem Zeitpunkt bereits berechenbar sind, vorberechnet. Zum Beispiel werden die Tonnenkilometer (Lastkilometer multipliziert mit Gewicht des Transportes) berechnet.

In Schritt S5 wird der neue Transport $T_N$, inklusive aller vorberechneten Attribute, gespeichert. Die Attribute des neuen Transports $T_N$ werden indiziert, um schnelle Anfragen darauf zu ermöglichen. Durch die Indizierung können zum Beispiel effizient nur die Transporte ausgewählt werden, die weniger als 5 Tonnen Gewicht haben.

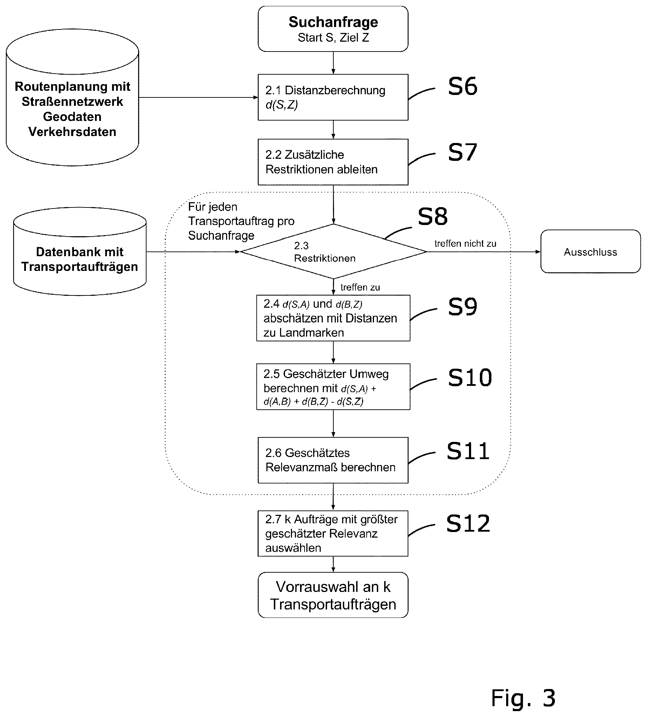

Fig. 3 zeigt das Verfahren, wenn eine Transportanfrage (Suchanfrage) mit Startpunkt S und Zielpunkt Z an das Berechnungssystem 10 gestellt wird. Es wird eine Vorauswahl an k relevanten bestehenden Transporten T der Angebotsmenge $M_{Rel}$ generiert. k wird so gewählt, dass das Relevanzranking in Echtzeit durchführbar ist. Zum Beispiel k = 1000. Eine Suchanfrage kann bereits vordefinierte Restriktionen (wie z.B. >5ldm und <7ldm; <5t; kein Gefahrgut; kein Hubwagen) beinhalten. Darüber hinaus kann man auch eine Suchanfrage über eine Tour mit mehreren Beladestellen Ai und Entladestellen Bi durchführen.

In Schritt S6 wird eine Direktdistanz ($D_D$) unter Verwendung einer Routenplanungsengine berechnet, welche die Distanz d(S,Z) zwischen Startpunkt S und Zielpunkt Z darstellt.

In Schritt S7 werden zusätzlich zu den Benutzerrestriktionen $R_B$, die der Benutzer im Rahmen seiner Suchanfrage gestellt hat, Restriktionen automatisch generiert. Dies geschieht, um die Menge der Transporte T, die berücksichtigt werden müssen, weiter einzuschränken. Eine generierte Restriktion kann zum Beispiel alle Transporte, die nicht zu einer bestimmten Region gehören, ausschließen. Falls der Fahrzeugtyp (Kapazität) und die Auslastung bekannt sind, kann zum Beispiel die maximale Zuladung (kg, $m^3$ oder ldm) errechnet werden und als Restriktion wirken.

In Schritt S8 werden die übermittelten oder abgeleiteten Restriktionen auf die Transportgesamtmenge $M_{ges}$, die in der Datenbank des Berechnungssystems 10 sind, angewendet. Nur die daraus resultierende Transportteilmenge $M_{res}$ der Transportgesamtmenge $M_{ges}$, die von keiner Restriktion ausgeschlossen werden, wird in Schritt S9 weiterverarbeitet.

In Schritt S9 werden Verbindungsdistanzen Dvi geschätzt, welche die Distanzen zwischen Startpunkt S und der Beladestelle A d(S,Ai) und zwischen der Entladestelle B und dem Zielpunkt Z d(Bi,Z) umfassen. Dafür werden die vorberechneten Landmarkendistanzen $D_{Lj}$ benutzt. Die Abschätzung von d(S,Ai) und d(Bi,Z) erfolgt durch die Anwendung der Dreiecksungleichung für Graphen. Die Abschätzung s(X,Y) für eine Distanz d(X,Y) geschieht durch folgende Formel:

$$d(X,Y) \geqq s(X,Y) = max_i \, (d(X,L_j) - d(Y,L_j), d(L_j,Y) - d(L_j,X))$$

In Schritt S10 wird der geschätzte Umweg $U_s$, der nötig ist, um eine Transportanfrage Q in den jeweiligen bestehenden Transport T zu integrieren, mit der folgenden Formel abgeschätzt.

$$U_s = s(S,A_i) + d(A_i,B_i) + s(B_i,Z) - d(S,Z)$$

Je mehr Landmarken $L_j$ vorhanden sind, desto besser wird die Abschätzung. Gleichzeitig reduziert sich jedoch auch die Geschwindigkeit der Berechnung.

In Schritt S11 wird die Relevanz eines bestehenden Transports T geschätzt. Als Grundlage für die geschätzte Relevanz $R_s$ des bestehenden Transports werden die vorberechneten Attribute sowie der geschätzte Umweg $U_s$ benutzt. Zum Beispiel:

$$\textit{Geschätzte Relevanz } R_s = \textit{Tonnenkilometer / Geschätzter Umweg } U_s.$$

In Schritt S12 wird aus der Transportteilmenge $M_{res}$, die Angebotsmenge $M_{rel}$ ausgewählt, welche die bestehenden Transporte T mit größter geschätzter Relevanz $U_s$ umfasst. Die Angebotsmenge $M_{rel}$ wird danach in der dritten Einheit 16 weiterverarbeitet.

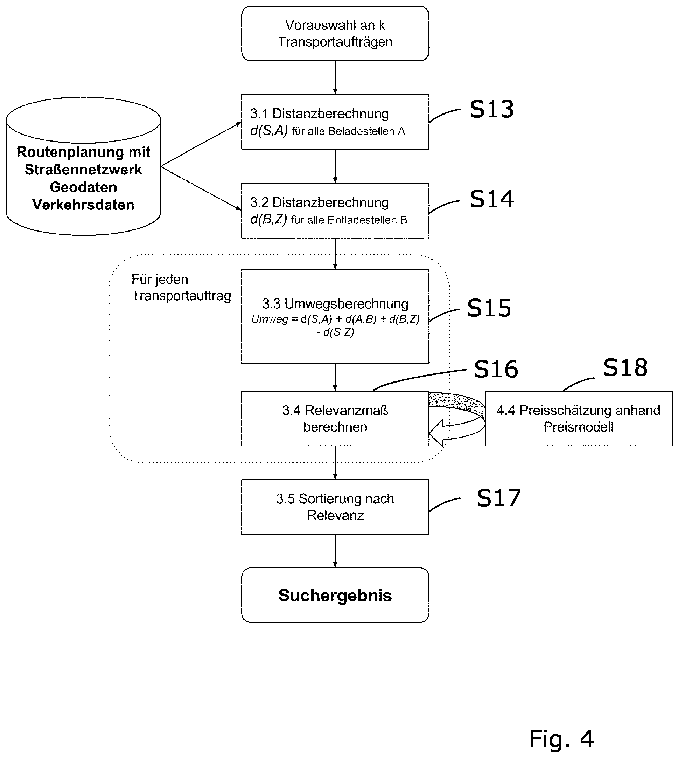

Fig. 4 zeigt das Relevanzranking der dritten Einheit 16. Eine Suchanfrage Q mit Startpunkt *S* und Zielpunkt *Z* wird an das Berechnungssystem 10 gestellt. Die zweite Einheit 14 stellt die Angebotsmenge $M_{rel}$ mit der Anzahl an k relevanten bestehenden Transporte T zur Verfügung. Für alle bestehenden Transporte T der Angebotsmenge $M_{rel}$ wird der exakte Umweg $D_D$ berechnet. Basierend auf dem exakten Umweg $D_D$ wird ein Relevanzranking erstellt.

In Schritt S13 werden für alle bestehenden Transporte T in der Angebotsmenge $M_{rel}$ die Verbindungsdistanzen Dvi berechnet, welche die Distanzen zwischen Startpunkt S und der Beladestelle Ai d(S,Ai) umfassen. Dies geschieht mit einer "one-to-many" Kürzeste-Wege-Berechnung. In dieser Berechnung ist der Startpunkt S der Startpunkt und die Beladestellen Ai sind die Zielpunkte.

In Schritt S14 werden für alle bestehenden Transporte T in der Angebotsmenge M$_{rel}$ die Verbindungsdistanzen Dvi berechnet, welche die Distanzen zwischen den Entladestellen Bi und dem Zielpunkt Z d(Bi,Z) umfassen. Dies geschieht mit einer "many-to-one" Kürzeste-Wege-Berechnung. In dieser Berechnung sind die Beladestellen Bi die Startpunkte und der Zielpunkt Z der Zielpunkt.

In Schritt S15 wird für alle Transporte in der Angebotsmenge M$_{rel}$ der exakte Umweg U$_D$ berechnet:

$$Exakter\ Umweg\ U_D = d(S,A_i) + d(A_i,B_i) + d(B_i,Z) - d(S,Z)$$

Dabei sind d(A$_i$,B$_i$) in Schritt S2 berechnet worden, d(S,Z) in Schritt S6 berechnet worden und d(Bi,Z) in Schritt S14 berechnet worden.

In Schritt S16 wird die bestimmte Relevanz R$_D$ mit dem exakten Umweg U$_D$ und den vorberechneten Attributen der bestehenden Transporte T bestimmt. Für die bestimmte Relevanz R$_D$ wird der in Schritt S22 später beschriebene geschätzte Preis und geschätzte Kosten (über Umwegeberechnung und gesammelte Daten) genutzt.

In Schritt S17 werden die bestehenden Transporte T der Angebotsmenge M$_{rel}$ absteigend nach der bestimmten Relevanz R$_D$ sortiert. Dem Benutzer wird eine Liste der relevantesten Transporte T als Suchergebnis präsentiert.

Die Relevanz ist ein Maß für die Eignung einer Transportintegration in die angegebene Relation einer Transportanfrage eines spezifischen Transportunternehmens. Die Relevanz wird von verschiedenen Relevanzkriterien beeinflusst.

Aus den Relevanzkriterien wird eine Maßzahl für die Relevanz eines Transports berechnet. Zum Beispiel:

$$Relevanz = Profitabilität * Aktualität + Nutzerpräferenz$$

Relevanzkriterien können unter anderem der (geschätzte) Preis der bestehenden Transporte T, der nötige Umweg zu Integration der Transportanfrage Q, nötige Kosten zu Integration der Transportanfrage Q, Profitabilität bei einer Integration der Transportanfrage Q, Aktualität der bestehenden Transport T (wann wurde die bestehende Transport T erstellt) und/oder weiche Faktoren, insbesondere persönliche Präferenz des Nutzers sein.

Relevanzkriterien können berechnet werden durch definierte Abhängigkeiten, insbesondere durch Formeln. Zum Beispiel:

$$Kosten = Umweg * Kosten/km$$

Außerdem können historische Daten herangezogen werden, um statistisch Abhängigkeiten zu ermitteln. So können Preise aus historischen Daten geschätzt werden.

Zusätzlich können Live-Daten, insbesondere umfassend Klickraten, aktuellen Marktpreise oder aktuelle Warenströme, berücksichtigt werden, um kurzfristige Preisschwankungen zu berücksichtigen. Es können zudem Benutzerangaben beziehungsweise Benutzerdaten verwendet werden. Zum Beispiel werden die Kosten pro Lastkilometer händisch vom Benutzer angegeben.

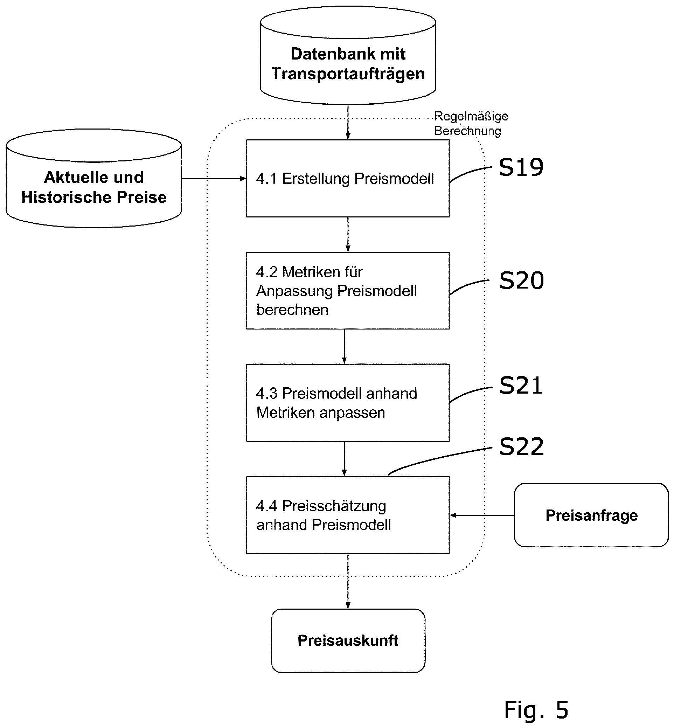

Fig. 5 zeigt das Preismodell der vierten Einheit 18. Um den Marktpreis von Transporten T einschätzen zu können, wird ein Preismodell erstellt. Dieses wird regelmäßig aktualisiert (zum Beispiel alle 10 Minuten). Bei der Anpassung des Preismodells werden Preise und die Angebotslage in der Datenbank für die bestehenden Transporte T berücksichtigt. Die über das Preismodell generierbaren Preisauskünfte können auch unabhängig von einer Suchanfrage verwendet werden.

In Schritt S19 wird ein Preismodell erstellt. Historische und aktuelle Preise werden genutzt, um die Preise der bestehenden Transporte T, die aktuell im System vorhanden sind, zu schätzen.

Hierfür gibt es verschiedene Methoden: Es können beispielsweise Techniken des Maschinellen Lernens genutzt werden, um für Transporte T ohne bekannten Preis ähnliche Transporte T mit bekanntem Preis zu finden. Der geschätzte Preis ergibt sich aus den Preisen der ähnlichen Transporte T (z.B. gewichteter Durchschnitt). Auf Grundlage von Tarifen (die selbst wiederum auf historischen Daten basieren) können ebenfalls Preise abgeleitet werden.

In Schritt S20 werden aus der Liste aller bestehender Transporte T verschiedene Metriken berechnet, die eine Indikation für die aktuelle Preislage ergeben. Zum Beispiel wird der Durchschnittspreis aller bestehender Transporte T im System, die einen aktuellen Preis haben berechnet oder Volumenströme (Angebot und Nachfrage) analysiert.

In Schritt S21 wird das Preismodell mit den aus Schritt S19 berechneten Preisen und mit den aus Schritt S20 berechneten Metriken aktualisiert, sodass Preismodelle in verschiedenen Formaten vorliegen. Ein Beispiel für ein Preismodell ist ein Matrixtarif mit kg und km.

In Schritt S22 wird eine Preisanfrage für eine Transportanfrage Q an das System gestellt. Zum Beispiel um die bestimmte Relevanz $R_D$ eines bestehenden Transports T zu bestimmen (Schritt S16). Das Preismodell wird für die bestehenden Transporte T ausgewertet. Als Ergebnis liefert das Modell einen geschätzten Preis für die angefragte Transportanfrage Q.

Das beschriebene Verfahren kann zur Suche von Zuladung für bestehende Transporte T mit mehreren Stopps genutzt werden. Dabei wird der bestehende Transport T in Teilstrecken zerlegt und für jede Teilstrecke wird eine Zuladungssuche mit dem System durchgeführt. Alle bestehenden Transporte T in den verschiedenen Suchergebnissen werden zu einem Suchergebnis zusammengeführt und dem Benutzer präsentiert.

Das beschriebene Verfahren kann zur Zuladungssuche genutzt werden, um aus allen bestehenden Transporten T automatisch Touren zu generieren. Dabei werden automatisch iterativ zu einem bestehenden Transport T weitere Transporte T mit der Zuladungssuche gesucht und in die erstellte Tour integriert. Dies geschieht solange bis die erstellte Tour eine gewünschte Länge erreicht hat.

Das beschriebene Verfahren kann zur simplen Auftragssuche für nicht ausgelastete Transportmittel genutzt werden, um kosteneffizienten Aufträge zu generieren. Dabei ist der Start- und Zielpunkt der Transportanfrage der Gleiche - vorzugsweise der Standort des Transportmittels.

Das beschriebene Verfahren kann auch vollautomatisiert angewendet werden. Hierzu müssen vom Benutzer Einstellungen getätigt werden, wie z.B. Marge > 500 € oder Umweg < 20 km. Dann werden vollautomatisch Transporte kombiniert, die den Einstellungen entsprechen.

Historische und aktuelle Verkehrsdaten können in die Routenplanungsengine integriert werden. Damit wird die aktuelle Verkehrslage in die Distanzmetrik mit aufgenommen. Zum Beispiel, wenn Fahrtzeit als Distanzmetrik benutzt wird, können Staus auf einer Strecke zu längeren Umwegen führen und somit das Relevanzranking des betroffenen Transports T beeinflussen.

Im Folgenden wird für eine bessere Verständlichkeit ein Zahlenbeispiel des beschriebenen Verfahrens gezeigt.

Die erste Einheit 12 speist einen neuen Transport $T_N$ in das Berechnungssystem 10 ein.

Landmarken: Lo: Flensburg, $L_1$: Konstanz

Neuer Transport $T_N$: Beladestelle A: München, Entladestelle B: Hamburg, Fracht: 4 Europaletten je 500 kg

Schritt S1:

Der Transport T wird der Region DE zugeordnet, da sowohl Beladestelle A als auch Entladestelle B in Deutschland liegen.

Schritt S2:

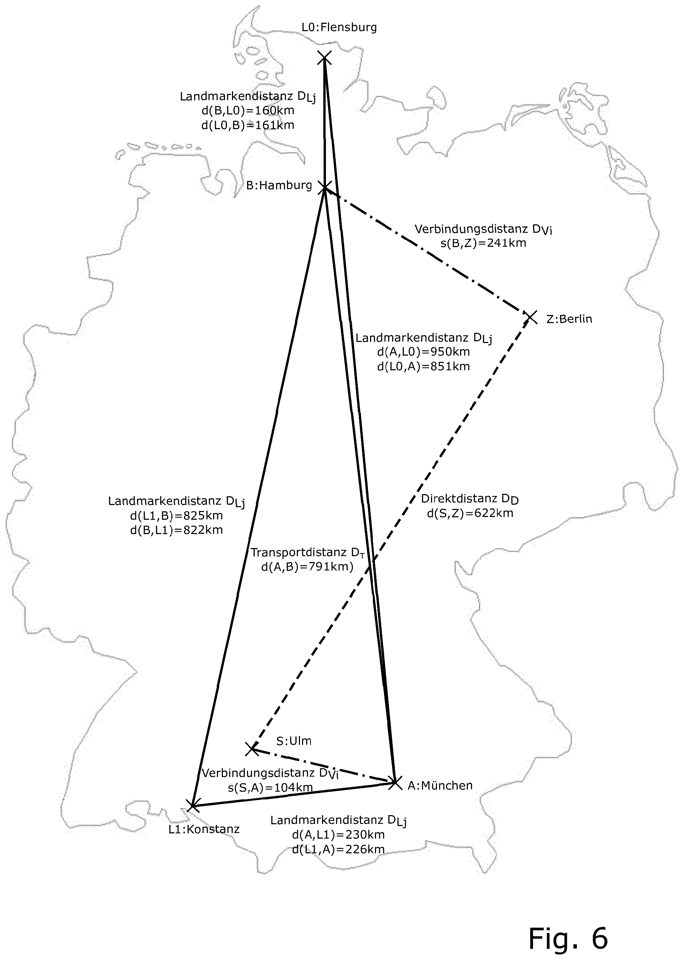

Landmarkendistanzen $D_{Lj}$ und die Transportdistanz $D_T$ werden mit der Routenplanungsengine (nicht Luftlinie wie in Fig.6 vereinfacht dargestellt) berechnet:

d(A,B) = d(München,Hamburg)=791 km;
d(A,Lo) = d(München,Flensburg) = 950km;
d(Lo,A) = d(Flensburg,München) = 951 km;
d(B,Lo) = d(Hamburg,Flensburg) = 160km;
d(Lo,B) = d(Flensburg,Hamburg) = 161 km;
d(A,$L_1$) = d(München,Konstanz) = 230km;
d($L_1$,A) = d(Konstanz,München) = 226km;
d(B,$L_1$) = d(Hamburg,Konstanz) = 822km;
d($L_1$,B) = d(Konstanz,Hamburg) = 825km;

Schritt S3:

Lademeter werden berechnet: 1,6m
Gesamtgewicht wird berechnet: 2000kg

Schritt S4:

Tonnenkilometer werden berechnet: *791km * 2t = 1582tkm*

Schritt S5:

Der neue Transport $T_N$ wird mit den berechneten Attributen in der Datenbank gespeichert. Die Attribute Lademeter und Gewicht werden indiziert.

| A | B | Region | d(A,B) | d(A,L$_0$) | d(Lo,A) | ... | Ladem. | Gewicht | Tonnenk. |
|---|---|---|---|---|---|---|---|---|---|
| München | Hamburg | DE | 791km | 950km | 951km | ... | 1,6m | 2.000kg | 1.582tkm |

Die zweite Einheit 14 führt das Restriktionsausschlussverfahren und das Relevanzausschlussverfahren durch

Suchanfrage: Startpunkt S: Ulm, Zielpunkt Z: Berlin, Benutzerrestriktion $R_B$: Maximal 15t.
Landmarken: Lo: Flensburg, $L_1$:Konstanz

Transporte in der Datenbank:

| A | B | Region | d(A,B) | d(A,L$_0$) | ... | Gewicht | Tonnenk |
|---|---|---|---|---|---|---|---|
| München | Hamburg | DE | 791km | 950km | ... | 2.000kg | 1582tkm |
| Paris | Nantes | FR | 385km | 1050km | ... | 1.000kg | 385tkm |
| Münster | Stuttgart | DE | 475km | 430km | ... | 17.000kg | 8075tkm |
| Dortmund | Stuttgart | DE | 420km | 505km | ... | 500kg | 210tkm |

Schritt S6:

Die Direktdistanz $D_d$ zwischen Startpunkt S Ulm und Zielpunkt Z Berlin wird berechnet: d(Ulm,Berlin) = 622km

Schritt S7:

Die Suchanfrage wird der Region DE zugeordnet. Zusätzliche Restriktion, die alle Transporte T deren Beladestelle Bi und Entladestelle Ei nicht in Deutschland liegt ausschließt, wird für die Suchanfrage generiert.

Schritt S8:

Der Transport T von Paris nach Nantes wird ausgeschlossen, da sie nicht zu der Region DE zugeordnet wurde (generierte Restriktion aus Schritt S7). Der Transport T von Münster nach Stuttgart wird ausgeschlossen, da sie mehr als *15t* umfasst (Restriktion der Suchanfrage).

Noch relevante Transporte T in der Datenbank:

| A | B | Region | d(A,B) | d(A,L$_0$) | ... | Gewicht | Tonnenk |
|---|---|---|---|---|---|---|---|
| München | Hamburg | DE | 791km | 950km | ... | 2.000kg | 1582tkm |
| Dortmund | Stuttgart | DE | 420km | 505km | ... | 500kg | 210tkm |

Schritt S9:

Für den Transport T München nach Hamburg werden die Distanzen s(Ulm, München) und s(Hamburg, Berlin) geschätzt.

Beispiel Abschätzung Distanz Ulm nach München mit Landmarken Flensburg und Konstanz:

$$s(Ulm,München) = max(d(Ulm,Flensburg) - d(München,Flensburg),$$

$$d(Flensburg,München) - d(Flensburg,Ulm), d(Ulm,Konstanz) -$$

$$d(München,Konstanz), d(Konstanz,München) - d(Konstanz,Ulm)) =$$

$$max(950km - 855km, 860km - 955km, 230km - 126km, 226km - 125km) =$$

$$104km$$

Die Fig. 6 ist ohne die Landmarkendistanzen $D_{L_j}$ d(Ulm, Konstanz), d(Ulm, Flensburg) vereinfacht dargestellt.

Schritt S10:

Für den Transport T von München nach Hamburg wird der Umweg geschätzt.

$$Geschätzter\ Umweg = s(Ulm,München) + d(München,Hamburg) +$$

$$s(Hamburg,Berlin) - d(Ulm,Berlin) = 104km + 791km + 241km - 622km =$$

$$514km$$

| A | B | Region | d(A,B) | d(A,L$_0$) | ... | Tonnenk | G. Umweg |
|---|---|---|---|---|---|---|---|
| München | Hamburg | DE | 791km | 950km | ... | 1582tkm | 514km |
| Dortmund | Stuttgart | DE | 420km | 505km | ... | 210tkm | 817km |

Schritt S11:

Für den Transport T von München nach Hamburg wird die Relevanz geschätzt.

$$Geschätzte\ Relevanz = Tonnenkilometer\ /\ Umweg = 1.582tkm\ /\ 514km =$$

$$3,08$$

| A | B | Region | d(A,B) | ... | Tonnenk | G.Umweg | G. Relevanz |
|---|---|---|---|---|---|---|---|
| München | Hamburg | DE | 791km | ... | 1582tkm | 514km | 3,08 |
| Dortmund | Stuttgart | DE | 420km | ... | 210tkm | 817km | 0,26 |

Schritt S12:

Für beispielsweise k=1 wird nur der Transport T von München nach Hamburg weiter verarbeitet da sie von den beiden Transporten T die größere geschätzte Relevanz hat.
Die dritte Einheit 16 führt das Relevanzranking durch.

Suchanfrage: Startpunkt S: Ulm, Zielpunkt Z: Berlin,

d(Ulm,Berlin) = 622km

Vorauswahl an Transporten T (k=4):

| A | B | d(A,B) | ... | Gewicht | Tonnenk. |
|---|---|---|---|---|---|

(fortgesetzt)

| München | Hamburg | 791km | ... | 2.000kg | 1582tkm |
|---------|---------|-------|-----|---------|---------|
| Frankfurt | Köln | 190km | ... | 1.000kg | 190tkm |
| Münster | Stuttgart | 475km | ... | 1.700kg | 807tkm |
| Dortmund | Stuttgart | 420km | ... | 500kg | 210tkm |

Schritt S13:

Distanzberechnung von Ulm nach München, Frankfurt, Münster und Dortmund in einer "one-to-many" Berechnung.

d(Ulm,München) = 155km
d(Ulm,Frankfurt) = 288km
d(Ulm,Münster) = 556km
d(Ulm,Dortmund) = 501km

Schritt S14:

Distanzberechnung von Hamburg, Köln und Stuttgart nach Berlin in einer "many-to-one" Berechnung.

d(Hamburg,Berlin) = 288km
d(Köln,Berlin) = 571km
d(Stuttgart,Berlin)) 632km

Schritt S15:

Umwegsberechnung für den Transport T von München nach Hamburg:

$$Umweg = d(Ulm,München) + d(München,Hamburg) + d(Hamburg,Berlin) - d(Ulm,Berlin) = 155km + 791km + 288km - 622km = 612km$$

| A | B | d(A,B) | ... | Gewicht | Tonnenk. | Umweg |
|---|---|--------|-----|---------|----------|-------|
| München | Hamburg | 791km | ... | 2.000kg | 1582tkm | 612km |
| Frankfurt | Köln | 190km | ... | 1.000kg | 190tkm | 427km |
| Münster | Stuttgart | 475km | ... | 1.700kg | 807tkm | 1.051 km |
| Dortmund | Stuttgart | 420km | ... | 500kg | 210tkm | 931km |

Schritt S16:

Beispiel Relevanzberechnung für den Transport von München nach Hamburg:

$$Relevanz = Tonnenkilometer / Umweg = 1582tkm / 612km = 2,85$$

Alternatives Beispiel mit geschätzter Profitabilität unter Berücksichtigung des geschätzten Preises (Schritt S22):

$$Relevanz = Geschätzte\ Profitabilität = Geschätzter\ Preis − Geschätzte\ Kosten = 112,19€ - 81,00€ = 31,19€$$

Schritt S17:

Sortierte Ergebnisliste für Beispiel Suchanfrage mit Start Ulm und Ziel Berlin.

| A | B | d(A,B) | ... | Tonnenk. | Umweg | Relevanz |
|---|---|---|---|---|---|---|
| München | Hamburg | 791km | ... | 1582tkm | 612km | 2,85 |
| Münster | Stuttgart | 475km | ... | 807tkm | 1.051km | 0,77 |
| Frankfurt | Köln | 190km | ... | 190tkm | 427km | 0,44 |
| Dortmund | Stuttgart | 420km | ... | 210tkm | 931km | 0,23 |

Die vierte Einheit 18 berechnet das Preismodell.

Schritt S19:

Die Preise jedes Transportes T werden mit Hilfe von aktuellen Preisen (falls vorhanden) und historischen Daten (z.B. Matrixtarife oder Preis letzter Woche) geschätzt.

| A | B | d(A,B) | ... | Gewicht | Tonnenk. | Gesch. Preis |
|---|---|---|---|---|---|---|
| München | Hamburg | 791km | ... | 2.000kg | 1582tkm | 250€ |
| Frankfurt | Köln | 190km | ... | 1.000kg | 190tkm | 60€ |
| Münster | Stuttgart | 475km | ... | 1.700kg | 807tkm | 120€ |
| Dortmund | Stuttgart | 420km | ... | 500kg | 210tkm | 85€ |

Schritt S20:

Beispiel einer Anpassungsmetrik: für jede Relation werden aktuelle Volumenströme und Ladekapazitäten analysiert und mit historischen Daten verglichen. Hieraus ergeben sich Anpassungsfaktoren für die jeweiligen Preise. Volumenfluss von Bayern nach Hamburg (KW1): 150000 Tonnen Ladungsgesuche von Bayern nach Hamburg (KW1): 200000 Lademeter Volumenfluss von Bayern nach Hamburg (aktuell): 150000 Tonnen Ladungsgesuche von Bayern nach Hamburg (aktuell): 190000 Lademeter => Volumenfluss bleibt konstant Ladekapazität leicht gesunken => Anpassung des Preises um 5%.

| A | B | d(A,B) | ... | Gewicht | Tonnenk. | Gesch. Preis | Faktor |
|---|---|---|---|---|---|---|---|
| München | Hamburg | 791km | ... | 2.000kg | 1582tkm | 250€ | 1,05 |
| Frankfurt | Köln | 190km | ... | 1.000kg | 190tkm | 60€ | 0,98 |
| Münster | Stuttgart | 475km | ... | 1.700kg | 807tkm | 120€ | 1,1 |
| Dortmund | Stuttgart | 420km | ... | 500kg | 210tkm | 85€ | 1,07 |

Schritt S21:

Der geschätzte Preis wird final angepasst.

| A | B | d(A,B) | ... | Gewicht | Tonnenk. | Gesch. Preis | Faktor | Final gesch. Preis |
|---|---|---|---|---|---|---|---|---|
| München | Hamburg | 791km | ... | 2.000kg | 1582tkm | 250€ | 1,05 | 263€ |
| Frankfurt | Köln | 190km | ... | 1.000kg | 190tkm | 60€ | 0,98 | 59€ |
| Münster | Stuttgart | 475km | ... | 1.700kg | 807tkm | 120€ | 1,1 | 132€ |
| Dortmund | Stuttgart | 420km | ... | 500kg | 210tkm | 85€ | 1,07 | 91€ |

Schritt S22:

Für jeden Transport T kann nun eine Preisanfrage erfolgen.

Alternativ kann aus dem Preismodell auch ein allgemeingültiger Matrix-Tarif (oder relationen-gebundener Tarif) erstellt werden. Preisanfragen können dann auch ohne im System gespeicherte Transporte T erfolgen.

Fig. 6 ist eine schematische Darstellung der verschiedenen Distanzen des Zahlenbeispiels.

Gezeigt sind die in Schritt S2 berechneten Landmarkendistanzen Lj $d(B,L_0)$, $d(L_0,B)$, $d(A,L_0)$, $d(L_0,A)$, $d(L_1,B)$, $d(B,L_1)$, $d(A,L_1)$ und $d(L_1,A)$ zwischen den Landmarken L0 (Flensburg) beziehungsweise $L_1$ (Konstanz) und der beladestelle A (München) beziehungsweise der Entladestelle B (Hamburg).

Außerdem ist die in Schritt S2 berechnete Transportdistanzdistanz $D_T$ $d(A,B)$ zwischen der Beladestelle A (München) und der Entladestelle B (Hamburg) gezeigt.

Zusätzlich ist die in Schritt S6 berechnete Direktdistanz $D_D$ $d(S,Z)$ zwischen dem Startpunkt S (Ulm) und dem Zielpunkt Z (Berlin) gezeigt.

Schließlich sind die in Schritt S9 geschätzten Verbindungsdistanzen Dvi $s(S,A)$ zwischen dem Startpunkt S (Ulm) und der Beladestelle A (München) und $s(B,Z)$ zwischen der Entladestelle B (Hamburg) und dem Zielpunkt Z (Berlin) gezeigt.

Bezugszeichenliste

| | |
|---|---|
| 10 | Berechnungssystem |
| 12 | erste Einheit |
| 14 | zweite Einheit |
| 16 | dritte Einheit |
| 18 | vierte Einheit |
| T | bestehender Transport |
| TN | neuer Transport |
| Q | Transportanfrage (Suchanfrage) |
| $D_{Lj}$ | Landmarkendistanz |
| $D_T$ | Transportdistanz |
| $D_D$ | Direktdistanz |
| $D_{Vi}$ | Verbindungsdistanz |
| $M_{Ges}$ | Transportgesamtmenge |
| $M_{Res}$ | Transportteilmenge |
| $M_{Rel}$ | Angebotsmenge |
| $R_s$ | Geschätzte Relevanz |
| $R_d$ | Bestimmte Relevanz |
| $R_B$ | Benutzerrestriktionen |
| $U_s$ | Geschätzter Umweg |
| $U_d$ | Exakter Umweg |
| $L_j$ | Landmarken |
| Ai | Beladestelle |
| Bi | Beladestelle |

**Patentansprüche**

1. Verfahren zur dynamischen Auslastungsoptimierung von Transportmitteln, insbesondere Frachttransportmitteln, wobei
einem Benutzer eine nach Relevanz sortierte Angebotsmenge ($M_{Rel}$) von bestehenden Transporten (T) angeboten wird, um eine Transportanfrage (Q) mit mindestens einem bestehenden Transport (T) zu kombinieren, umfassend die Schritte:

a) Erfassen (S2) von mindestens einer Landmarkendistanz ($D_{Lj}$), welche eine Distanz zwischen Landmarken ($L_j$) und/oder mindestens einer Beladestelle ($A_i$) und/oder mindestens einer Entladestelle ($B_i$) darstellt, und/oder einer Transportdistanz ($D_T$), insbesondere eine Distanz zwischen der Beladestelle ($A_i$) und der Entladestelle ($B_i$), für jeden bestehenden Transport (T) aus der Transportgesamtmenge ($M_{Ges}$);

b) Erfassen (S6) einer Direktdistanz ($D_D$), welche eine Distanz zwischen einem Startpunkt (S) und einem Zielpunkt (Z) der Transportanfrage (Q) darstellt;

c) Abschätzen (S9) einer Verbindungsdistanz ($D_{Vi}$) für mindestens einen Transport (T), welche eine Distanz zwischen dem Startpunkt (S) und der Beladestelle (A) und/oder einer Distanz zwischen der Entladestelle (B) und dem Zielpunkt (Z) darstellt, unter Verwendung von mindestens einer Landmarkendistanz ($D_{Lj}$);

d) Abschätzen eines Umwegs ($U_s$) für die mindestens einen Transport (T) unter Verwendung der erfassten Direktdistanz ($D_D$) und der erfassten Transportdistanz ($D_T$) und mindestens einer abgeschätzten Verbindungsdistanz ($D_{Vi}$) für jeden bestehenden Transport (T) aus der Transportgesamtmenge ($M_{Ges}$);

e) Abschätzen (S11) einer geschätzten Relevanz ($R_s$) von mindestens einem Transport (T) auf Basis des geschätzten Umwegs ($U_s$);

f) Durchführen (S12) eines Relevanzausschlussverfahrens unter Verwendung der Höhe der geschätzten Relevanz ($R_s$) zum Bestimmen einer relevanten Angebotsmenge ($M_{Rel}$) aus der Transportgesamtmenge ($M_{Ges}$);

g) Bestimmen (S15) des exakten Umwegs ($U_d$) jedes bestehenden Transports (T) aus der relevanten Angebotsmenge ($M_{Rel}$);

h) Bestimmen (S16) einer bestimmten Relevanz ($R_d$) der bestehenden Transporte (T) aus der relevanten Angebotsmenge ($M_{Rel}$) unter Verwendung des exakten Umwegs ($U_d$);

i) Anordnen (S17) der bestehenden Transporte (T) aus der relevanten Angebotsmenge ($M_{Rel}$) nach der bestimmten Relevanz ($R_d$);

j) insbesondere, Durchführen eines nach der bestimmten Relevanz ($R_d$) aus der relevanten Angebotsmenge ($M_{Rel}$) ausgewählten bestehenden Transports (T), mit der die Transportanfrage (Q) kombiniert ist.

2. Verfahren nach einem der voranstehenden Ansprüchen, wobei
vor Schritt c) ein Restriktionsausschlussverfahren unter Verwendung von Benutzerrestriktionen ($R_B$) ausgeführt wird, um die Schritte c) bis f) anstelle der Transportgesamtmenge ($M_{Ges}$) anhand einer Transportteilmenge ($M_{Res}$) durchzuführen;

3. Verfahren nach einem der voranstehenden Ansprüche, wobei
beim Erfassen gemäß Schritt a) mindestens ein Attribut für jeden bestehenden Transport (T) aus der Transportgesamtmenge ($M_{Ges}$) erfasst wird.

4. Verfahren nach Anspruch 3, wobei
das Attribut ein Gewicht des Transports und/oder Art der Fracht und/oder Lademeter des bestehenden Transports (T) und/oder Lastkilometer des bestehenden Transports (T) umfasst.

5. Verfahren nach einem der Ansprüche 2 bis 4, wobei
das Restriktionsausschlussverfahren unter Verwendung von automatisch generierten Restriktionen, die basierend auf den von den Benutzern angegebenen Benutzerrestriktionen ($R_B$) und des Attributs berechnet werden, durchgeführt wird.

6. Verfahren nach einem der Ansprüche 3 bis 5, wobei
die geschätzte Relevanz ($R_s$) unter Verwendung des Attributs berechnet wird.

7. Verfahren nach einem der Ansprüche 3 bis 5, wobei
die bestimmte Relevanz ($R_d$) unter Verwendung des Attributs berechnet wird.

8. Verfahren nach einem der voranstehenden Ansprüche, wobei
für jeden bestehenden Transport (T) der Angebotsmenge ($M_{Rel}$) mindestens eine Verbindungsdistanz ($D_{Vi}$), insbesondere die Distanz zwischen dem Startpunkt (S) und der Beladestelle ($A_i$), unter Verwendung einer "one-to-many"-Berechnung und/oder die Distanz zwischen der Entladestelle ($B_i$) und dem Zielpunkt (Z), unter Verwendung einer "many-to-one"-Berechnung, bestimmt wird.

9. Verfahren nach einem der voranstehenden Ansprüche, wobei
die Berechnung des exakten Umwegs ($U_d$) von mindestens einer erfassten Verbindungsdistanz ($D_{Vi}$), der erfassten Direktdistanz ($D_D$) und der erfassten Transportdistanz ($D_T$) abhängt.

10. Verfahren nach einem der voranstehenden Ansprüche, wobei
das Relevanzausschlussverfahren unter Verwendung eines Preismodells durchgeführt wird.

**11.** Verfahren nach Anspruch 10, wobei
das Preismodell einen Preis für einen Transport unter Verwendung von aktuellen Preisen und/oder historischen Preisen schätzt.

**12.** Verfahren nach einem der Ansprüche 10 oder 11, wobei
das Preismodell den Preis für einen Transport unter Verwendung von aktuellen und historischen Volumenflüssen und Ladungsgesuchen anpasst.

**13.** Verfahren nach einem der voranstehenden Ansprüche, wobei
die Schritte c) bis i) in Echtzeit, insbesondere unter einer Sekunde oder unter einer zehntel Sekunde durchgeführt werden, wobei insbesondere die Menge der Transporte, deren Umweg genau berechnet werden muss, soweit reduziert wird, dass eine Ergebnisdarstellung in Echtzeit für den Benutzer möglich ist.

**14.** Verfahren nach einem der voranstehenden Ansprüche, wobei
vor Schritt a) jeder bestehende Transport (T) aus der Transportgesamtmenge ($M_{Ges}$) einer oder mehrerer Regionen zugeordnet werden, durch welche die bestehenden Transporte (T) verlaufen.

**15.** Computerprogrammprodukt mit einem Programm zum Durchführen des Verfahrens nach einem der Ansprüche 1 bis 14.

**Claims**

**1.** Method for the dynamic utilization optimization of means of transport, in particular freight transport means, wherein a user is offered a supply quantity ($M_{Rel}$) of available transports (T) sorted by relevance in order to combine a transport request (Q) with at least one available transport (T), comprising the steps

a) recording (S2) at least one landmark distance ($D_{Lj}$), which represents a distance between landmarks ($L_j$) and/or at least one loading point ($A_i$) and/or at least one unloading point ($B_i$), and/or a transport distance ($D_T$), in particular a distance between the loading point ($A_i$) and the unloading point ($B_i$), for each available transport (T) from the transport total quantity ($M_{Ges}$);
b) recording (S6) a direct distance ($D_D$) which represents a distance between a starting point (S) and a destination point (Z) of the transport request (Q);
c) estimating (S9) a connecting distance ($D_{Vi}$) for at least one transport (T), which represents a distance between the starting point (S) and the loading point (A) and/or a distance between the unloading point (B) and the destination point (Z), using at least one landmark distance ($D_{Lj}$);
d) estimating a diversion (Us) for the at least one transport (T) using the recorded direct distance ($D_D$) and the recorded transport distance ($D_T$) and at least one estimated connecting distance ($D_{Vi}$) for each available transport (T) from the transport total quantity ($M_{Ges}$);
e) estimating (S11) an estimated relevance ($R_S$) of at least one transport (T) based on the estimated diversion ($U_S$);
f) performing (S12) a relevance exclusion procedure using the level of estimated relevance ($R_S$) to determine a relevant supply quantity ($M_{Rel}$) from the transport total quantity ($M_{Ges}$);
g) determining (S15) the exact diversion ($U_d$) of each available transport (T) from the relevant supply quantity ($M_{Rel}$);
h) determining (S16) a specific relevance ($R_d$) of the available transports (T) from the relevant supply quantity ($M_{Rel}$) using the exact diversion ($U_d$);
i) arranging (S17) the available transports (T) from the relevant supply quantity ($M_{Rel}$) according to the specific relevance ($R_d$);
j) in particular, performing an available transport (T) selected from the relevant supply quantity ($M_{Rel}$) according to the specific relevance ($R_d$) with which the transport request (Q) is combined.

**2.** Method according to any of the preceding claims, wherein
before step c) a restriction exclusion method is carried out using user restrictions ($R_B$) in order to carry out steps c) to f) on the basis of a transport partial quantity ($M_{Res}$) instead of the transport total quantity ($M_{Ges}$).

**3.** Method according to one of the preceding claims, wherein
when recording according to step a), at least one attribute is recorded for each available transport (T) from the transport total quantity ($M_{Ges}$).

4. Method according to claim 3, wherein
the attribute comprises a weight of the transport and/or of the type of freight and/or loading metres of the available transport (T) and/or load kilometres of the available transport (T).

5. Method according to any one of claims 2 to 4, wherein
the restriction exclusion method is carried out using automatically generated restrictions calculated based on the user restrictions ($R_B$) specified by the users and on the attribute.

6. Method according to any of claims 3 to 5, wherein
the estimated relevance ($R_s$) is calculated using the attribute.

7. Method according to any of claims 3 to 5, wherein
the specific relevance ($R_d$) is calculated using the attribute.

8. Method according to any one of the preceding claims, wherein
for each available transport (T) of the supply quantity ($M_{Rel}$) at least one connecting distance ($D_{Vi}$), in particular the distance between the starting point (S) and the loading point ($A_i$), is determined using a "one-to-many" calculation and/or the distance between the unloading point ($B_i$) and the destination point (Z), using a "many-to-one" calculation.

9. Method according to any one of the preceding claims, wherein
the calculation of the exact diversion ($U_d$) depends on at least one recorded connection distance ($D_{Vi}$), the recorded direct distance ($D_D$) and the recorded transport distance ($D_T$).

10. Method according to any one of the preceding claims, wherein
the relevance exclusion procedure is carried out using a pricing model.

11. Method according to claim 10, wherein
the pricing model estimates a price for a transport using current prices and/or historical prices.

12. Method according to any one of claims 10 or 11, wherein
the pricing model adjusts the price for a transport using current and historical volume flows and load requests.

13. Method according to any one of the preceding claims, wherein
the steps c) to i) are carried out in real time, in particular in less than one second or less than a tenth of a second, wherein in particular the quantity of transports, the diversion of which must be calculated accurately, is reduced to such an extent that a presentation of results in real time for the user is possible.

14. Method according to any one of the preceding claims, wherein
before step a) each available transport (T) from the transport total quantity (MGes) is associated with one or more regions through which the available transports (T) pass.

15. Computer program product comprising a program for carrying out the method according to any one of claims 1 to 14.

**Revendications**

1. Procédé pour l'optimisation dynamique de l'exploitation de moyens de transport, en particulier de moyens de transport de marchandises, dans lequel
une quantité d'offre ($M_{Rel}$) de transports existants (T) triée selon la pertinence est proposée à un utilisateur, afin de combiner une demande de transport (Q) avec au moins un transport existant (T), comprenant les étapes consistant à :

a) saisir (S2) au moins une distance de repère ($D_{Lj}$) qui représente une distance entre des repères ($L_j$) et/ou au moins un emplacement de chargement ($A_i$) et/ou au moins un emplacement de déchargement ($B_i$), et/ou une distance de transport ($D_T$), en particulier une distance entre l'emplacement de chargement ($A_i$) et l'emplacement de déchargement ($B_i$), pour chaque transport existant (T) parmi la quantité totale de transports ($M_{Total}$) ;
b) saisir (S6) une distance directe ($D_D$) qui représente une distance entre un point de départ (S) et un point de destination (Z) de la demande de transport (Q) ;

c) estimer (S9) une distance de liaison ($D_{vi}$) pour au moins un transport (T), qui représente une distance entre le point de départ (S) et l'emplacement de chargement (A) et/ou une distance entre l'emplacement de déchargement (B) et le point de destination (Z), en utilisant au moins une distance de repère ($D_{Lj}$) ;

d) estimer un détour ($U_s$) pour ledit au moins un transport (T) en utilisant la distance directe saisie ($D_D$) et la distance de transport saisie ($D_T$) et au moins une distance de liaison estimée ($D_{Vi}$) pour chaque transport existant (T) parmi la quantité totale de transport ($M_{Ges}$) ;

e) estimer (S11) une pertinence estimée ($R_s$) d'au moins un transport (T) sur la base du détour estimé ($U_s$) ;

f) mettre en œuvre (S12) une procédure d'exclusion de pertinence en utilisant le niveau de pertinence estimé ($R_s$) pour déterminer une quantité d'offre pertinente ($M_{Rel}$) parmi la quantité de transport totale ($M_{Ges}$) ;

g) déterminer (S15) le détour exact ($U_d$) de chaque transport existant (T) parmi la quantité d'offre pertinente ($M_{Rel}$) ;

h) déterminer (S16) une pertinence déterminée ($R_d$) des transports existants (T) parmi la quantité d'offre pertinente ($M_{Rel}$) en utilisant le détour exact ($U_d$) ;

i) classer (S17) les transports existants (T) parmi la quantité d'offre pertinente ($M_{Rel}$) en fonction de la pertinence déterminée ($R_d$) ;

j) en particulier, effectuer un transport existant (T) choisi parmi la quantité d'offre pertinente ($M_{Rel}$) en fonction de la pertinence déterminée ($R_d$), avec laquelle la demande de transport (Q) est combinée.

2. Procédé selon l'une des revendications précédentes,
dans lequel, avant l'étape c), une procédure d'exclusion de restriction est effectuée en utilisant des restrictions d'utilisation ($R_B$) afin d'exécuter les étapes c) à f) au lieu de la quantité de transport totale ($M_{Ges}$) sur la base d'une quantité de transport partielle ($M_{Res}$).

3. Procédé selon l'une des revendications précédentes,
dans lequel, lors de la saisie selon l'étape a), au moins un attribut est saisi pour chaque transport existant (T) parmi la quantité totale de transports ($M_{Ges}$).

4. Procédé selon la revendication 3,
dans lequel l'attribut comprend un poids du transport et/ou un type de fret et/ou une capacité de chargement du transport existant (T) et/ou une distance disponible du transport existant (T).

5. Procédé selon l'une des revendications 2 à 4,
dans lequel la procédure d'exclusion de restriction est exécutée en utilisant des restrictions générées automatiquement et calculées sur la base des restrictions d'utilisation ($R_B$) spécifiées par les utilisateurs et sur la base de l'attribut.

6. Procédé selon l'une des revendications 3 à 5,
dans lequel la pertinence estimée ($R_s$) est calculée en utilisant l'attribut.

7. Procédé selon l'une des revendications 3 à 5,
dans lequel la pertinence déterminée ($R_d$) est calculée en utilisant l'attribut.

8. Procédé selon l'une des revendications précédentes,
dans lequel pour chaque transport existant (T) parmi la quantité d'offre ($M_{Rel}$), au moins une distance de liaison ($D_{Vi}$), en particulier la distance entre le point de départ (S) et l'emplacement de chargement ($A_i$), est déterminée en utilisant un calcul "un à plusieurs (one-to-many)" et/ou la distance entre l'emplacement de déchargement ($B_i$) et le point de destination (Z), en utilisant un calcul "plusieurs à un (many-to-one)".

9. Procédé selon l'une des revendications précédentes,
dans lequel le calcul du détour exact ($U_d$) dépend d'au moins une distance de liaison saisie ($D_{Vi}$), de la distance directe saisie ($D_D$) et de la distance de transport saisie (DT).

10. Procédé selon l'une des revendications précédentes,
dans lequel la procédure d'exclusion de pertinence est effectuée en utilisant un modèle de tarification.

11. Procédé selon la revendication 10,
dans lequel le modèle de tarification estime un prix pour un transport en utilisant des prix actuels et/ou des prix historiques.

**12.** Procédé selon l'une des revendications 10 ou 11,
dans lequel le modèle de tarification ajuste le prix d'un transport en utilisant des flux de volume actuels et historiques et les demandes de chargement.

**13.** Procédé selon l'une des revendications précédentes,
dans lequel les étapes c) à i) sont effectuées en temps réel, en particulier en moins d'une seconde ou en moins d'un dixième de seconde, et en particulier la quantité de transports, dont le détour doit être calculé exactement, est réduite dans une mesure telle qu'une représentation du résultat en temps réel est possible pour l'utilisateur.

**14.** Procédé selon l'une des revendications précédentes,
dans lequel, avant l'étape a), chaque transport existant (T) parmi la quantité totale de transports ($M_{Ges}$) est affecté à une ou plusieurs régions à travers lesquelles circulent les transports existants (T).

**15.** Produit de programme informatique comprenant un programme permettant de mettre en œuvre le procédé selon l'une des revendications 1 à 14.

10

12

**Neuer Transportauftrag**

**Suchanfrage**

Echtzeit Suchanfrage

14

**1. Vorberechnung**
Vorberechnung von Distanzen und Attributen des Transportauftrags.

**2. Ausschlussverfahren**
Abschätzung des Umwegs mit Hilfe der vorberechneten Distanzen. Relevanz mit geschätztem Umweg und der vorberechneten Attribute schätzen.

**Datenbank mit Transportaufträgen**

Vorauswahl an k Transportaufträgen

**4. Preismodell**
Preismodell zur aktuellen Marktlage. Berechnet aus aktuellen Transportaufträgen, aktuellen Preisen und historischen Daten.

**3. Relevanzranking**
Exakte Umwege berechnen. Relevanz mit exaktem Umweg berechnen. Sortierung der Transportaufträge nach Relevanz.

18

**Preisauskunft**

**Suchergebnis**

16

Fig. 1

```
                                          ┌─────────────────────┐
                                          │       Neuer         │
                                          │  Transportauftrag   │
                                          └──────────┬──────────┘
                                                     │
                                                     ▼
  ┌──────────────────┐              ┌─────────────────────────────┐
  │                  │─────────────▶│ 1.1. Geographische Region   │  ─ S1
  │  Routenplanung mit│             │ zuordnen                    │
  │  Straßennetzwerk  │             └──────────────┬──────────────┘
  │    Geodaten       │                            │
  │  Verkehrsdaten    │                            ▼
  │                  │─────────────▶┌─────────────────────────────┐
  └──────────────────┘             │ 1.2 Distanzberechnung von und│  ─ S2
                                    │ zu Landmarken L, Beladestelle│
                                    │ A, Entladestelle B:          │
                                    │ d(A,B) d(A, L), d(L,A), d(B,L), d(L,B)│
                                    └──────────────┬──────────────┘
                                                   │
                                                   ▼
                                    ┌─────────────────────────────┐
                                    │ 1.3 Attribute für Restriktionen│ ─ S3
                                    │ vorberechnen                 │
                                    └──────────────┬──────────────┘
                                                   │
                                                   ▼
                                    ┌─────────────────────────────┐
                                    │ 1.4 Attribute für Relevanzmaß│ ─ S4
                                    │ vorberechnen                 │
                                    └──────────────┬──────────────┘
                                                   │
                                                   ▼
                                    ┌─────────────────────────────┐
                                    │ 1.5 Attribute des neuen      │ ─ S5
                                    │ Transports in Indexierung    │
                                    │ integrieren                  │
                                    └──────────────┬──────────────┘
                                                   │
                                                   ▼
                                    ┌─────────────────────────────┐
                                    │     Datenbank mit            │
                                    │   Transportaufträgen         │
                                    │    und Indexierung           │
                                    └─────────────────────────────┘
```

Fig. 2

**Suchanfrage**
Start S, Ziel Z

**Routenplanung mit**
**Straßennetzwerk**
**Geodaten**
**Verkehrsdaten**

2.1 Distanzberechnung
$d(S,Z)$

S6

2.2 Zusätzliche
Restriktionen ableiten

S7

Für jeden
Transportauftrag pro
Suchanfrage

S8

**Datenbank mit**
**Transportaufträgen**

2.3
Restriktionen

treffen nicht zu

Ausschluss

treffen zu

2.4 $d(S,A)$ und $d(B,Z)$
abschätzen mit Distanzen
zu Landmarken

S9

2.5 Geschätzter Umweg
berechnen mit $d(S,A)$ +
$d(A,B) + d(B,Z) - d(S,Z)$

S10

2.6 Geschätztes
Relevanzmaß berechnen

S11

2.7 k Aufträge mit größter
geschätzter Relevanz
auswählen

S12

Vorrauswahl an k
Transportaufträgen

Fig. 3

Vorauswahl an k
Transportaufträgen

Routenplanung mit
Straßennetzwerk
Geodaten
Verkehrsdaten

3.1 Distanzberechnung
$d(S,A)$ für alle Beladestellen A

S13

3.2 Distanzberechnung
$d(B,Z)$ für alle Entladestellen B

S14

Für jeden
Transportauftrag

3.3 Umwegsberechnung
$Umweg = d(S,A) + d(A,B) + d(B,Z) - d(S,Z)$

S15

S16        S18

3.4 Relevanzmaß
berechnen

4.4 Preisschätzung anhand
Preismodell

3.5 Sortierung nach
Relevanz

S17

**Suchergebnis**

Fig. 4

Fig. 5

L0:Flensburg

Landmarkendistanz $D_{Lj}$
d(B,L0)=160km
d(L0,B)=161km

B:Hamburg

Verbindungsdistanz $D_{Vi}$
s(B,Z)=241km

Z:Berlin

Landmarkendistanz $D_{Lj}$
d(A,L0)=950km
d(L0,A)=851km

Landmarkendistanz $D_{Lj}$
d(L1,B)=825km
d(B,L1)=822km

Direktdistanz $D_D$
d(S,Z)=622km

Transportdistanz $D_T$
d(A,B)=791km)

S:Ulm

Verbindungsdistanz $D_{Vi}$
s(S,A)=104km

A:München

L1:Konstanz

Landmarkendistanz $D_{Lj}$
d(A,L1)=230km
d(L1,A)=226km

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015248638 A1